# EUROPÄISCHE PATENTSCHRIFT

(11) **EP 0 647 818 B1**
(45) Veröffentlichungstag und Bekanntmachung des Hinweises auf die Patenterteilung: **29.11.1995**
(21) Anmeldenummer: 93115416.5
(22) Anmeldetag: 24.09.1993
(51) Int. Cl.: F24D 3/10

(54) **Dezentralisiertes Heizungssystem in Strömungs-Bustechnik**
Decentralized heating system of multiple out-flow pipe design
Système de chauffage décentralisé dans lequel usage est fait de techniques de conduites d'écoulement multiples

(43) Veröffentlichungstag der Anmeldung: 12.04.1995
(73) Patentinhaber: Sandler Energietechnik GmbH & Co. KG, D-87600 Kaufbeuren (DE)
(72) Erfinder: Sandler, Martin, D-87600 Kaufbeuren (DE)
(74) Vertreter: Leonhard, Frank Reimund, Dipl.-Ing.

(56) Entgegenhaltungen:
- CH-A- 454 397
- DE-A- 2 347 106
- DE-A- 3 244 005

## Beschreibung

Die Erfindung betrifft ein dezentralisiertes modulares Heizungssystem in StrömungsBustechnik; sie betrifft auch ein Verfahren zum dezentralisierten Wärmeverteilen (oder Wärmeaufnehmen) in größeren Gebäuden (DE-A 32 44 005, Strelow; CH-B 454 397, Wirsbo). Ebenfalls vorgeschlagen wird ein Zweigmodul, das in dem modularen dezentralisierten Heizungssystem vielseitig einsetzbar ist und zur Durchführung des erwähnten Verfahrens eingesetzt werden kann (DE-A 23 47 106, Brunner).

Bei größeren Gebäuden, wie Mehrfamilienhäusern und Krankenhäusern sowie auch bei mehrstöckigen Ein- oder Zweifamilienhäusern werden Heizungsanlagen heute so aufgebaut, daß eine Heizungszentrale im Keller oder in einem anderen tiefgelegenen Raum für jeden Benutzer individuell konfiguriert aufgebaut wird und dabei einen oder mehrere Heizkessel, einen oder mehrere Warmwasserspeicher und eine Vielzahl von Pumpen und Rohrleitungen umfaßt, die zu den einzelnen Räumen führen. Jede Rohrleitung wird einzeln verlegt und angeschlossen.

Der Erfindung geht es nun darum, diese zentrale Anordnung zu dezentralisieren. Dabei löst sich die Erfindung von dem Gedanken, in einem vorbestimmten konzentrierten Bereich eine Vielzahl von Aggregaten und Verteilern vorzusehen, und wendet sich einem zumindest dreisträngigen Zentralbus zu, der zumindest drei Rohrleitungen enthält, die eng benachbart und gegeneinander isoliert angeordnet sind. Jedes der drei erwähnten Rohre des Zentralbusses führt ein Wärmetransportmedium mit einer anderen Temperatur. So können an beliebigen Orten des Zentralbusses dezentrale Zweigmodule angeordnet werden, die eine strömungsmäßige Aus- und Einkopplung zum/vom Zentralbus an den jeweiligen Orten ermöglichen. Eine der drei Rohrleitungen des Zentralbusses wird als Rücklauf ausgebildet und führt das Wärmetransport-Medium der anderen beiden Leitungen auf einem erheblich niedrigeren Temperaturniveau zurück. Die beiden anderen Rohrleitungen führen das Wärmetransportmedium auf mittlerem und hohem Temperaturniveau, so daß unterschiedliche Wärmeerzeuger in die eine oder die andere Rohrleitung einspeisen und verschiedene Wärmeverbraucher entsprechend ihrer Eigenschaft das Wärmetransportmedium auf verschiedenem Temperaturniveau entnehmen können.

Das erwähnte **Einspeisen** ermöglicht die Erfindung durch die dezentralen Zweigmodule an beliebiger Stelle des Zentralbusses. So kann im Dachbereich des Gebäudes ein Solarkollektor angeschlossen werden, der in den nächstgelegenen Zentralbus Wärme einspeist. Ist es auch der Regelfall, daß der Zentralspeicher weiterhin im Keller des Gebäudes angeordnet ist, so ist dies gemäß der Erfindung nicht mehr zwingend der Fall, weil die Wärme des Zentralspeichers aufgrund des zumindest dreisträngigen Zentralbus-Rohrleitungssystems auch an beliebiger Stelle dieses Zentralbusses eingespeist werden kann. Eine Wärmepumpe ist nicht mehr zwingend nahe dem Zentralspeicher des Standes der Technik anzuordnen, sie kann von ihm entfernt angeordnet werden, dort wo es für sie zweckmäßig ist und in den nächstgelegenen Bereich des Zentralbusses Wärme einspeisen. Ein Holzvergaserkessel muß auch nicht mehr zwingend in den Keller verbannt werden, er kann an anderer Stelle möglicherweise vorteilhafter aufgestellt werden und speist von anderer Stelle in das Zentral-Bussystem ein.

Erwähnt waren also bislang die Einspeisemöglichkeiten, der Zentralbus eröffnet aber ebenso die **Entnahme** von Wärme in dezentraler Form. Dazu wird ein Lokalbus gebildet, der mit dem Zentralbus in Strömungsverbindung steht, und zwar mit zumindest zwei seiner drei Rohrleitungen. So kann ein üblicher Heizkörper an die Rohrleitung mit der mittleren Temperatur des Zentralbusses angeschlossen sein und der Rücklauf des Heizkörpers mit der Rohrleitung des Zentralbusses verbunden sein, die auf dem geringsten Temperaturniveau ist.

Eine dezentrale Wärmeentnahme und ein ebensolcher dezentraler eigenständiger Strömungs-Lokalbus ist auch die dezentrale Warmwasserversorgung, die über einen modularen Frischwassererwärmer ausgeführt wird, der zwischen zwei Rohrleitungen des Zentralbus einen Platten-Wärmetauscher anordnet und dessen Primärkreislauf mit den Anschlüssen in dem Brauchwasser-Erwärmungsmodul den geschlossenen Lokalbus bildet. Der Wärmetauscher ist sekundärseitig von Frischwasser durchflossen, das an einem Eingangsanschluß von einer üblichen Druckwasserleitung in das Wärmetauscher-Zweigmodul eingespeist wird und über den Brauchwasser-Ausgang in die lokale Brauchwasserversorgung eingespeist wird, um zu den Zapfstellen zu gelangen. Damit kann vermieden werden, daß ein dauernd erwärmtes Wasser über eine lange Rohrleitung zum Verbraucher (den Zapfstellen) geführt werden muß.

Insgesamt ermöglicht das dezentrale Heizungssystem eine schnellere Reaktion auf Veränderungen der lokalen Gegebenheiten und demgemäß geringere Schwankungen in dem Zentralbus.

Die enge Verlegung des Zentralbusses schafft zusätzlich Raum, da nur noch stockwerksindividuell oder zonenindividuell Leitungssysteme verlegt werden müssen.

Das System ist besonders hygienisch hinsichtlich des erwärmten Brauchwassers, das nur noch eine kurze Strecke in warmer Form zurücklegen muß. Eine Verkeimung des Wassers oder eine bakteriologische Beeinflussung des Wassers kann zuverlässig vermieden werden.

Der Stabilisierung des Zentralbusses dient es auch, daß alle wärmeeinspeisenden Lokalbusse über die Länge des Zentralbusses verteilt angeordnet sein können. So kann ein Solarkollektor an dem höchsten Ende (meist vor dem Dach des Gebäudes) in den Zentralbus einspeisen und ein im Keller angeordneter Zentralspeicher am anderen, unteren Ende des Zentralbusses die Haupt-Wärmeeinspeisung in den Zentralbus bewerkstelligen.

Neben den drei erwähnten Rohrleitungen des Zentralbusses kann auch eine vierte Rohrleitung hinzukommen, die (auch) ein Wärme-Transportmedium führt. Es hat eine Temperatur, die unterhalb des erwähnten zentralen Rücklaufes liegt. Es kann zu Kühlungszwecken herangezogen werden und nach ihrer Erwärmung ebenfalls in den Zentralrücklauf münden. Auch diese Art von Zweigmodulen fallen unter das erwähnte **Einspeisen** von Wärme - was physikalisch gesehen nichts anderes, als eine Kühlung ist - allerdings auf einem anderen Temperaturniveau und in die Rohrleitung des Zentralrücklaufs.

Generell werden über Zweigmodule also Wärmeaustauscher angeschlossen, sei es, daß sie Wärme abgeben (Heizelement) oder sei es, daß sie Wärme einspeisen (Speicher oder Kühlelement).

Werden mehrere der erwähnten Module, die zumindest drei Haupt-Rohrabschnitte haben, die im wesentlichen parallel verlaufen und die mit den Zentralbus-Rohrleitungen aneinandergereiht oder "seriell geschaltet" werden, so kann modular ein für den speziellen Anwendungsfall abgestimmtes Heizsystem aufgebaut werden. Die Lagerhaltung verschiedener Baugruppen verkleinert sich, da mit den Moduln eine individuelle Lösung geschaffen werden kann, obwohl nur eine begrenzte Anzahl von Moduln gelagert wird.

Ein Beispiel für die Temperaturen, die die Wärme-Transportmedien in den drei oder vier Rohrleitungen des Zentralbusses haben, sei ein Bereich von 60° bis ca. 12°C angesprochen. Bei etwa 60°C liegt dann die Temperatur des Strömungsmediums in einem der drei oder vier Rohrleitungen, bei etwa 30°C bis 40°C liegt die Temperatur des Strömungsmediums in einem zweiten Rohr des Zentralbusses und bei etwa 20°C liegt die Temperatur des Rücklaufes des Zentralbusses. Kommt ein viertes Kühlrohr im Zentralbus dazu, so kann es dasselbe Wärme-Transportmedium führen, allerdings mit einer Temperatur von etwa 10°C bis 12°C.

Die individuellen Module können in großer Stückzahl standardisiert gefertigt werden und vor Ort für den jeweiligen Anwendungsfall mit Verbindern (Steck-, Flansch- oder Schraubverbindern) zusammengefügt werden (Anspruch 4). Die Module weisen dabei eine erheblich geringere Abmessung auf, als wenn die zentrale Heizungsversorgung im Kellerraum eines Gebäudes vor Ort mit individuellen Leitungen ohne Modultechnik aufgebaut würde.

Es soll noch einmal betont werden, daß die Erfindung unter den lokalen Strömungs-Bussen solche Rohrleitungssysteme oder -abschnitte versteht, die über ein Zweigmodul aus dem Zentralbus abzweigen und nach Durchlaufen eines Wärmeabgabeelementes oder Wärmeaufnahmeelementes (Wärmeaustauschelement) wieder zum Zentralbus zurückkehren. Die Erfindung versteht unter lokalen Bussen allerdings auch solche Rohrleitungen, die aus dem zentralen Rücklauf das Wärme-Transportmedium abzweigen, über einen Wärmelieferanten erwärmen und in eines der Rohrleitungen zurückspeisen, die das Wärme-Transportmedium auf einem höheren Temperaturniveau führen. Unter Lokalbus versteht die Erfindung schließlich auch die unmittelbare Speisung eines Wärmetauschers im Zweigmodul selbst; in dem Wärmetauscher wird dabei ein durch seinen Sekundärkreislauf strömendes Frischwasser erwärmt, das zu einer Zapfstelle geführt wird, von wo es allerdings nicht zum Zentralbus zurückkehrt. Die wärmeaustauschenden Endgeräte sind dabei **an** den Lokalbus angeschlossen, ebenso wie der Lokalbus **an** den Zentralbus angeschlossen ist.

Unter Zentralbus versteht die Erfindung ein zumindest dreisträngiges, meist viersträngiges Rohrleitungssystem, das die erwähnte Anzahl von Rohren in paralleler Form über eine lange Strecke führt. Die geometrische Ausrichtung aller Rohre des Zentralbusses zueinander ist an allen Stellen des Gebäudes gleich, so daß an allen Stellen Zweigmodule eingefügt werden können, die auf den vorgegebenen Rohrabstand des Zentralbusses abgestimmt sind.

Die Zweigmodule können dabei horizontal oder vertikal an den Zentralbus angeflanscht werden. Sie können auch zur Bildung eines Abschnitts des Zentralbusses eng aneinander gereiht werden, so daß ihre kurzen Zentralbus-Abschnitte mit den beidseitigen Verbindern aufgrund der Mehrzahl der aneinandergereihten Zweigmodule einen Abschnitt des Zentralbusses definieren.

Eine digitale Steuereinheit D kann an beliebiger Stelle des Zentralbusses angeordnet sein. Parallel zum Zentralbus kann dann auch ein Steuerbus verlaufen, der elektrische Signale zur Steuerung der Vielzahl von Zweigmodulen führt. Ebenfalls können Meßsignale von den Zweigmodulen über diesen Steuerbus zu der Steuereinheit D geführt werden.

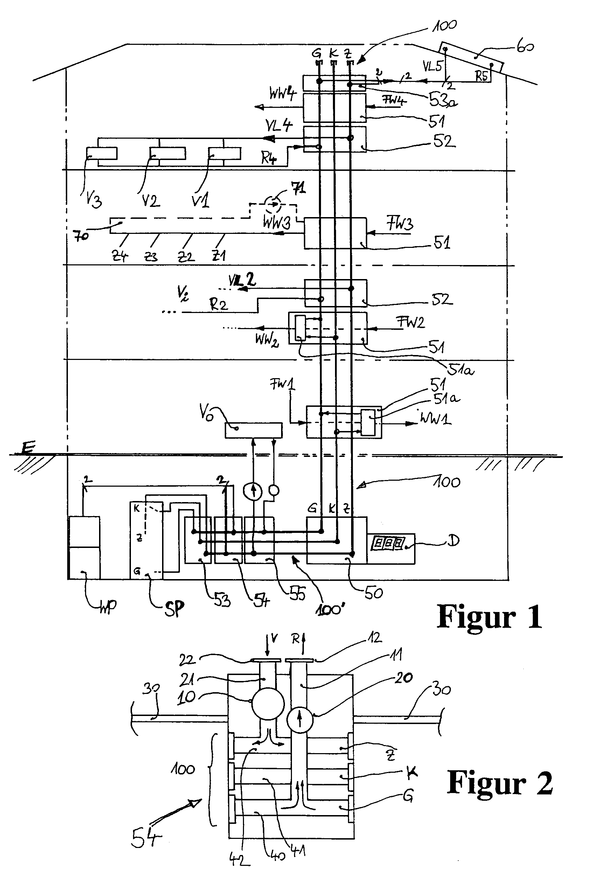

Die eingangs zitierten Druckschriften offenbaren folgendes:
(a) Strelow (DE-A 32 44 005) offenbart sogenannte Energie-Übergabestationen, die in jeder Etage eines Wohnhauses vorgesehen sind. Sie bilden Kopplungsstellen von einer **zentralen** Wärmeanlage zu den **dezentralen** Verbrauchern. Zwischen der Übergabe-Station (dort beispielsweise Ziffer 1 in Figur 1 und Ziffern 49,48,47,46,45 in Figur 5, siehe auch Seite 7 unten) und dem zentralen Wärmeerzeuger liegt **ein zweisträngiger Bus** bestehend aus Vorlauf und Rücklauf. Er ist in der dortigen Figur 5 mit 41,43 bezeichnet. **Fest** an diesem Bus werden über Abzweigungen 44 (vgl. dort Seite 8 oben) die erwähnten Übergabe-Stationen angeschlossen.
   Die **modulare** Anknüpfung von mehreren Zweigmodulen an einen **mindestens dreisträngigen** Zentralbus (Merkmale a,b des Anspruchs 1 und erstes Merkmal des Anspruchs 7 und Anspruch 8 insgesamt) ist von Strelow nicht offenbart.
(b) Wirsbo (CH-B 454 397) offenbart ein der Strelow-Anordnung ähnliches Bussystem mit Vorlauf und Rücklauf (also **nur zwei** Stränge für den Zentralbus) in einem mehrgeschossigen Wohnhaus; vgl. dort Figur 2 und Spalte 1, Zeilen 1 bis 7. Kern der dortigen Offenbarung sind sogenannte "Verteiler", die in jeder Wohnetage an den zweisträngigen Bus angeschlossen sind (vgl. dort Spalte 2, Zeilen 14 bis 17) und eine **Rohrverbindung** (vgl. dort Spalte 2, Zeile 20), die Vorlauf und Rücklauf miteinander an deren jeweiligem oberen Ende miteinander verbindet. Auf den ersten Blick scheinen die Wirsbo-Verteiler mit den Zweigmodulen (Merkmal b,c des Anspruchs 1, zweites Merkmal des Anspruchs 7 und Anspruch 8 insgesamt) vergleichbar zu sein; dieser Vergleich ist allerdings nur oberflächlicher Natur, die tatsächliche technische Wirkung und die Aufgabe der Verteiler von Wirsbo weichen erheblich von denen der Zweigmoduln der Erfindung ab. Besonders deutlich wird das an der dortigen Figur 8 (Beschreibung Spalte 4, Absatz 1) im Vergleich zu der Figur 2 der Erfindung und der **alternativ** bei Wirsbo im Bereich der Verteiler vorgesehenen wärmeleitenden Lötverbindungsfuge zwischen Vorlauf und Rücklauf (dort Figur 6, Ziffer 45 und Beschreibung Spalte 6, Zeilen 5 bis 8). Wirsbo beabsichtigt eine dauerhafte Zirkulation von Vorlauf und Rücklauf und erreicht dies durch die obere Rohrverbindung Vorlauf/Rücklauf und die enge **wärmeleitende Kopplung** von Vorlauf und Rücklauf **in** jedem Verteiler (Lötverbindung bzw. durchdringende Mantelflächen). Jeder Verteiler von Wirsbo hat also die Wirkung und die Aufgabe, Vorlauf **und** Rücklauf unmittelbar wärmeleitend zu koppeln. Anders das Merkmal (b) des Anspruchs 1, wo mindestens zwei der Zentralbusleitungen **strömungsmäßig** mit dem Lokalbus gekoppelt werden, ohne **die Wärmeisolation** des Zentralbusses (Merkmal a des Anspruchs 1) aufzuheben oder zu unterbrechen. Die Erfindung (Anspruch 1, Anspruch 7, Anspruch 8) vermeidet also die Wärmekopplung der Wirsbo-Verteiler.
(c) Brunner (DE-A 23 47 106) beschreibt modulare Etagenverteiler für "Einrohr-Heizanlagen" (Doppelstrang aus Vorlauf V und Rücklauf R). Sie werden in Mauerkästen nahe bei dem Doppelstrang verlegt und koppeln einen Lokalbus (dort Etagenvorlauf Vₑ, Etagenrücklauf Rₑ) aus dem zweisträngigen Zentralbus (dort V,R) aus. Das ist vergleichbar mit den Merkmalen (b),(c) des Anspruchs 1, nicht allerdings mit dem Merkmal (a) des Anspruchs 1, das einen **mindestens dreisträngigen** Zentralbus beschreibt, von dem Brunner weit entfernt ist. Das bei Brunner eingezeichnete dritte Fallrohr F für **Schmutzwasser** gehört nicht zu Heizungsvorlauf oder -rücklauf, sondern sammelt überflüssiges, aus dem Vorlauf/Rücklauf ausgekoppeltes Wasser, das in einer Sammelrinne (dort 32,4 bzw. Seite 10, Absatz 4) anfällt. Fallrohr F gehört demgemäß zur **Abwasseranlage**, nicht zum Heizkreis.
   Brunner zeigt also weder einen kompakten dreisträngigen Heizungszentralbus, noch unterschiedliche Vorlauftemperaturen, noch Module, die drei eng benachbarte Haupt-Rohrabschnitte haben (Anspruch 1, Merkmal a; Anspruch 7, erstes Merkmal und Anspruch 8 insgesamt).

Die Erfindung soll anhand eines beispielhaften vierstöckigen Wohnhauses erläutert werden.

**Figur 1** zeigt einen schematischen Schnitt durch ein vierstöckiges Gebäude mit einem darunterliegenden Kellerraum. Im Keller ist ein Zentralspeicher SP angeordnet, der von einem nicht dargestellten Kessel beschickt werden kann. Er kann auch über das Zentral-Bussystem 100 und über das ihn daran koppelnde Zweigmodul 53 gespeist und angezapft werden.

**Figur 2** ist eine Vergrößerung eines Zweigmodules, das an einer Haltestange 30 gehaltert wird.

In Figur 1 war der Zentralbus 100 erwähnt worden, der drei Rohrleitungen G, K und Z enthält. Die Rohrleitung G bildet den Zentral-Rücklauf, in ihm wird Wasser als Wärme-Transportmedium strömen, das eine Temperatur von etwa 20° aufweist. Das den mittleren Temperaturbereich repräsentierende Busrohr Z repräsentiert einen Temperaturbereich von 30 bis 40°C; es kann zur Versorgung von normalen Heizkörpern oder modernen Wärmeabgabe-Elementen dienen. Das Busrohr K führt Wasser mit einer Temperatur von etwa 60°C und speist alle dezentralen Brauchwasser-Erwärmungsmodule 51, in denen jeweils ein Wärmetauscher 51a direkt eingebaut ist, dessen Sekundärseite einen Frischwasser-Zuström-Anschluß FWi mit einem erwärmten Brauchwasser-Abfluß WWi (i=1,2,...) verbindet. Diese Brauchwasser-Erwärmung kann lokal, im Beispiel stockwerksindividuell, vorgesehen sein. In den unterschiedlichen Stockwerken ist die Frischwasser-Zuführung FW2, FW3 bezeichnet und die Warmwasser-Abgabe mit WW2, WW3 (i stellt dies allgemein dar). Für das Brauchwasser-Erwärmungs-Zweigmodul in Etage 3 sind beispielhafte vier Zapfstellen Z1, Z2, Z3 und Z4 eingezeichnet, die mit dem Brauchwasser-Ausgang WW3 des Brauchwasser-Erwärmungsmoduls 51 strömungsmäßig mittels Stichleitungen verbunden sind.

Statt der Stichleitungen könnte auch eine (gestrichelt gezeichnete) Zirkulationsleitung 70 ans Ende der Zapfstellen angeschlossen werden, die eine gesteuerte/geregelte Umwälzung 71 ermöglicht, um sofortige Warmwasser-Versorgung an allen Zapfstellen verfügbar zu machen.

In Stockwerk 1 und 2 sind beispielhaft die in dem Zweigmodul angeordneten Wärmetauscher 51a dargestellt, die mit der Zentral-Busleitung K und dem Zentralrücklauf G jeweils strömungsmäßig verbunden sind.

In Etage 4 des beispielhaften Gebäudes ist ein Zweigmodul 53a gezeigt, das ein Einspeisemodul von einem Solarkollektor 60 ist. Der Solarkollektor 60 wird mit seinem Vorlauf VL5 mit dem Zentral-Busrohr Z verbunden sein und das zu erwärmende Wasser aus dem Zentral-Rücklauf G über Rohrabschnitt R5 entnehmen.

Nicht dargestellt, aber unmittelbar mit der Steurungseinheit D verbunden ist ein Elektronikbus, der parallel zu den Zentralbus-Rohrleitungen G, K und Z verläuft. Er steuert die einzelnen Zweigmodule und erhält von ihnen Meßwerte zur Überwachung und Regelung.

Als weitere Repräsentanten der verschiedenen aber in ihrer Artenvielfalt begrenzten Module sind die Module 54, 55 und 52 hervorgehoben, wovon das Modul 54 ein Einspeisemodul ist, das mit einem Modul 53a im Dachbereich vergleichbar ist, nur daß es mit einer Wärmepumpe WP im Erdbereich E verbunden ist. Gegebenenfalls können diese beide Module sogar identisch ausfallen.

Das wohl gebräuchlichste Modul ist das Modul 52, das normale Heizkörper oder moderne Wärmeabgabeelemente speist. Neben diesen können von ihm auch Kapillarrohrmatten oder andere Wärmeerzeuger oder -abgabesysteme gespeist werden, die über einen im Beispiel stockwerksindividuellen Vorlauf VL2 oder VL3 (allgemein VLᵢ) versorgt werden und einen jeweiligen stockwerksindividuellen Rücklauf R3, R2 (allgemein Ri) haben, der in den zentralen Rücklauf G über dasselbe Heizelement-Zweigmodul 52 führt. Die in Etage 4 beispielhaft dargestellten drei Heizkörper des herkömmlichen Radiatorentyps sind mit V1, V2 und V3 bezeichnet. In Stockwerk 2 werden Kapillarrohrmatten über den dortigen Vorlauf VL2 gespeist, ihre Vielzahl von einzelnen eng benachbarten parallelen Heizschleifen ist mit Vᵢ bezeichnet.

Eine Abwandlung des Heizelement-Zweigmodules 52 ist das im Kellerbereich gezeigte Großverbraucher-Zweigmodul 55, das einen größeren Heizkörper V0 im Erdgeschoß (Etage 1) des beispielhaften Gebäudes speist. Dieser kurze Heizkreislauf bildet auch einen Lokalbus, der von dem kellerseitigen Zentralbus 100 über das erwähnte Zweigmodul 55 und eine Umwälzpumpe sowie ein Rücklaufventil oder -filter oder Mischventil oder Temperatur- oder Strömungsmesser abzweigt. Ohne Änderung des Regelverhaltens und der Heizmöglichkeiten des Systemes wäre es ebenso möglich , das Abzweigemodul 55 für Groß-Wärmeverbraucher V0 in der Etage 1 neben den dortigen Warmwasser-Erzeugungsmodul 51 an/in den Zentralbus strömungsmäßig zu koppeln. Das Anschlußmodul für die Wärmepumpe 54 ist in **Figur 2** vergrößert herausgezeichnet. Es ist Teil des kellerseitigen Zentralbus-Abschnittes 100', der aus drei nebeneinander angeordneten Zweigmodulen besteht und eine modulare Rohr-Umlenkeinheit 50 enthält, die von einem horizontal verlaufenden Zentralbus 100' in einen vertikal verlaufenden Zentralbus 100 überleitet. Er verläuft dann durch alle dargestellten Stockwerke des Gebäudes, bis unter das Dach, wo die Einspeisung vom Sonnenkollektor 60 erfolgt.

Das vergrößerte Einspeisemodul 54 für die Wärmepumpe WP macht deutlich, daß drei kurze Rohrabschnitte in diesem Zweigmodul parallel zueinander angeordnet sind, die kurze Abschnitte des Zentralbusses darstellen. Sie sind mit 40, 41 und 42 bezeichnet. Beidseits weisen diese kurzen - einen größeren Strömungsquerschnitt aufweisenden - Zentralbus-Abschnitte Verbindungs-Flansche auf, an denen die benachbarten Module angebracht werden können. Alternativ können auch Preß-/ Schraubverbindungen oder Stechverbinder vorgesehen werden. Diese Verbindungsbereiche sind unmittelbar im Modul oder nur leicht aus dem Modul hervorstehend gestaltet.

Anders die quer abzweigenden Rohrleitungsabschnitte 11, 21 zum Lokalbus V, R, der in diesem Fall in die Wärmepumpe WP mündet. Die eingezeichnete Pumpe 20 im "Rücklauf" R und das dargestellte Ventil 10 im "Vorlauf" V sind hier beispielhaft in das Modul integriert. Es ist aber ebenso möglich, das Modul vertikal zu verkürzen und die Pumpe 20 und das beispielhafte Rücklaufventil 10 oberhalb des Zweigmodules 54 zwischen Flanschabschnitten anzubringen. Die Flanschabschnitte 12,22 des quer verlaufenden Lokalbusses, die im dargestellten Beispiel in Strömungsrichtung hinter der Pumpe und in Strömungsrichtung vor dem Rücklauf-Ventil 10 angeordnet sind, stehen deutlich aus dem Zweigmodul hervor, um eine leichtere Anflanschmöglichkeit zu bieten. Dargestellt ist auch eine Tragschiene 30, in die die mehreren aneinandergereihten Module eingehängt werden.

Nicht dargestellt ist die Kühl-Rohrleitung des Zentralbusses, die ein wärmetransportierendes Strömungsmedium führt, das eine Tremperatur um etwa 10°C aufweist und das nach Erfüllung seiner Kühlaufgabe in den Zentral-Rücklauf von einem - ebenfalls nicht dargestellten - Kühl-Zweigmodul rückgeführt. wird.

Jedes einer bestimmten Aufgabe zugedachte Modul - Kühl-Zweigmodul, in Form eines Kälteabgabemoduls oder eines Kälteeinspeisemodul, Wärmeabgabe-Zweigmodul, Solarkollektor- oder sonstiges Wärme-Einspeisemodul, Zentralspeicher- oder Lokalspeicher-Ankopplungsmodul, Brauchwasser-Erwärmungsmodul - kann individuell beschriftet werden und zeigt an seiner Lokalbus-Seite nur die beiden Rohrleitungen, die für diesen Typ von Wärmeaustauscher (Wärmelieferant oder Verbraucher) benötigt werden. Innerhalb des Modules sind dann die zutreffenden Verbindungen zu den drei oder vier parallelen und eng benachbarten Rohrleitungen des Zentralbusses geschaffen, so daß auch Installateure mit wenig Detailwissen um das Gesamtsystem die lokalen Strömungsbusse einfach und zeitersparend anschließen können.

Obwohl die Ausgänge zum Lokalbus 12, 22 in **Figur 2** auf derselben Seite liegend angeordnet sind, können sie bei Zweckmäßigkeit - zum Beispiel im Modul 51 mit dem integrierten Wärmetauscher 51a für das Frischwasser - auf zwei gegenüberliegenden Seiten aus dem jeweiligen Modul hervorstehen, so daß dann alle vier Seitenwände des Modules mit Strömungs-Ein- und -Ausgängen versehen sind.

In den einzelnen Moduln können neben Beschriftungen auch digitale Meßwerte angezeigt werden, wie Temperatur, Wärmeverbrauch und/oder Strömungsgeschwindigkeit. So können einfach und übersichtlich statistische Erfassungen über das Verhalten einzelner Lokalbus-Systeme gemacht werden, um genauere Kenntnis von denjenigen Wärmesenken (Heizkörpern oder sonstigen Verbrauchern) zu erhalten, die besonders energieverzehrend sind.

## Patentansprüche

1. Dezentralisiertes modulares Heizungssystem in Bustechnik,
(a) mit einem zumindest dreisträngigen Zentralbus (100; G,K,Z), der eine erste Rohrleitung (K) für ein auf eine erste Temperatur erwärmtes Wärme-Transportmedium, eine zweite Rohrleitung (Z) für ein auf eine zweite Temperatur erwärmtes Wärmetansportmedium und eine dritte Rohrleitung (G) für das Wärmetransportmedium mit einer dritten Temperatur aufweist, die eng benachbart und gegeneinander isoliert angeordnet sind;
(b) mit mehreren Zweigmoduln (50 bis 55), die an beliebigen Orten des Zentralbusses mit diesem gekoppelt sind, wobei je mindestens zwei der Rohrleitungen (Z,G,K) strömungsmäßig zu einem Lokalbus aus- bzw. eingekoppelt werden;
(c) wobei das freie Ende jedes von je einem Zweigmodul gebildeten Lokalbusses zu einem innerhalb des Moduls angeordneten Brauchwasser-Erwärmer (51) oder einem außerhalb des Moduls angeordneten Wärmeaustauscher (Wärmelieferanten; 60; Wärmeverbraucher; V1,V2,V3) führt.

2. Heizungssystem nach Anspruch 1, bei dem
der Zentralbus (100) eine vierte Rohrleitung enthält, die ein Kühlmedium führt und als Wärmelieferant ein Kälteerzeuger und als Wärmeverbraucher ein Kältelieferant anschließbar ist.

3. Heizungssystem nach Anspruch 1 oder 2, bei dem
jedes Zweigmodul drei bzw. vier kurze Rohrabschnitte (40, 41, 42) enthält, die mit dem Zentralbus (100) fluchten und zumindest zwei quer vom Zentralbus über Armaturen, wie Pumpen (20), Ventile, Strömungsmesser oder Mischer, oder - in einen Wärmetauscher (51a) abzweigende bzw. einmündende - Rohr-Abschnitte (11,21) aufweist.

4. Heizungssystem nach Anspruch 3, bei dem
die Zentralbus-Rohrabschnitte (40, 41, 42) an ihren Enden Verbindungseinrichtungen tragen, die nicht oder nur wenig über die Begrenzung des Zweigmodules hervorstehen.

5. Heizungssystem nach Anspruch 3 oder 4, bei dem
die lokalen Zweigmodule für Warmwasserbereitung einen Druckwasser-Anschluß (FW₁, FW₂,FW₃) für frisches Leitungswasser, einen lokalen Brauchwasser-Anschluß (WW1, WW2, WW3) für erwärmtes Brauchwasser und einen Wärmetauscher (51a) enthalten, der als Verbraucher über den dezentralen Lokalbus mit den entsprechenden kurzen Zentralbus-Rohrabschnitten (40,41,42) strömungsmäßig gekoppelt ist.

6. Heizungssystem nach einem der vorhergehenden Ansprüche, bei dem
ein Zweigmodul (53) einen Sonnenkollektor (60) an zwei der Rohrleitungen des Zentralbusses (100) koppelt, um Wärme dezentral einzuspeisen.

7. Verfahren zur dezentralisierten Wärmeverteilung in einem größeren Gebäude, bei dem
- über einen Zentralbus (100) mindestens zwei Rohrleitungen (K,Z) gebäudeweit Warmwasser unterschiedlicher Temperatur gesondert verfügbar machen und eine Rohrleitung (G) des Zentralbusses (100) einen gebäudeweiten Rücklauf von deutlich abgesenkter Temperatur bereitstellt;
- dezentrale Zweigmodule (50 bis 56) den Zentralbus (100) lokal an individuelle Strömungs-Lokalbusse koppeln, um Wärmeverbraucher (V1,V2; 51a; V0) oder Wärmelieferanten (60) an ihn anzuschließen.

8. Zweigmodul für ein modulares Heizungssystem nach einem der vorhergehenden Ansprüche, bei dem
auf engem Raum zumindest drei Haupt-Rohrabschnitte (40,41,42) im wesentlichen parallel verlaufen, die beidseitig Verbindungsanschlüsse haben und im wesentlichen senkrecht dazu zumindest zwei lokale Rohrabschnitte (11,21) abzweigen, an die ein lokales Wärme-Austauschsystem (70;51a;V0, VLi, Ri, Vi, WP) oder ein Wärmespeicher (SP) anschließbar ist oder angeschlossen ist.

9. Zweigmodul nach Anspruch 8, in dem
ein Wärmetauscher (51a) vorgesehen ist, der das lokale Wärme-Austauschsystem bildet, indem seine Primärseite an zwei der im wesentlichen parallel verlaufenden Haupt-Rohrabschnitte angeschlossen ist (G, Z) und dessen Sekundärseite einen Zweigmodul-Eingang (FWi) für eine Frischwasserzufuhr mit einem Zweigmodul-Ausgang (WWi) für - im Betrieb - warmes Brauchwasser verbindet.

10. Zweigmodul nach Anspruch 8, bei dem
die zwei abzweigenden lokalen Rohrabschnitte (11, 21) einen lokalen Vorlauf (VLᵢ) und einen lokalen Rücklauf (Rᵢ) für eine wärmeabgebende Wärmesenke (V1,V2,V3) oder eine wärmezuführende Wärmequelle (60, WP, SP) bilden.

11. Zweigmodul nach Anspruch 10, bei dem die zwei abzweigenden Lokal-Rohrabschnitte (11,21) außerhalb des Zweigmoduls angeordnete Verbindungseinrichtungen (12,22) für einen sich lokal erstreckenden Vorlauf (VLi) und Rücklauf (Ri) haben.

## Claims

1. A decentralised modular bus-type or multiple flow-path heating system comprising :
(a) a central bus (100; G, K, Z) with at least three tracks or paths comprising a first pipe system (K) for a heat transfer medium heated to a first temperature, a second pipe system (Z) for a heat transfer medium heated to a second temperature, and a third pipe system (G), the systems being closely adjacent and insulated from one another; and
(b) a number of branch modules (50 to 55) coupled to the central bus at required places, at least two of the pipe systems (Z, G, K) being coupled to, or uncoupled from, a local bus for flow purposes;
(c) wherein the free end of each local bus formed by a branch module leads to a domestic water heater (51) disposed inside the module or to a heat exchanger (heat supplier; 60; heat consumers; V1, V2, V3) disposed outside the module.

2. A heating system according to claim 1, wherein the central bus (100) contains a fourth pipe system which conveys a cooling medium, and a cold generator can be connected as the heat supplier and a cold supplier as the heat consumer.

3. A heating system according to claim 1 or 2, wherein each branch module contains three or four short pipe portions (40, 41, 42) in line with the central bus (100) and at least two pipe portions (11, 21) which branch transversely from the central bus via fittings such as pumps (20), valves, flow-meters or mixers, or open into a heat exchanger (51a).

4. A heating system according to claim 3, wherein the central bus pipe portions (40, 41, 42) end in connecting devices which project little if at all beyond the boundary of the branch module.

5. A heating system according to claim 3 or 4, wherein the local branch modules for hot-water supply or production comprise a pressure connection (FW₁, FW₂, FW₃) for fresh tap water, a local domestic-water connection (WW1, WW2, WW3) for heated water for domestic use, and a heat exchanger (51a) constituting a consumer and coupled via the decentral local bus to the corresponding short central-bus pipe portions (40, 41, 42) for flow purposes.

6. A heating system according to any of the preceding claims, wherein a branch module (53) couples a solar collector (60) to two of the pipe systems in the central bus (100) in order to supply heat decentrally.

7. A method of decentralised heat distribution in a large building, wherein
- at least two pipe systems (K, Z) supply an entire building with hot water separately at different temperatures via a central bus (100) and one pipe system (G) in the central bus provides a return flow from the entire building at an appreciably reduced temperature, and
- decentralised branch modules (50 to 56) connect the central bus (100) locally to individual local flow buses in order to connect it to heat consumers (V1, V2; 51a; VO) or heat suppliers (60) to the central bus.

8. A branch module for a modular heating system according to any of the preceding claims, wherein at least three main pipe portions (40, 41, 42) extend substantially parallel in a narrow space and have connections at both ends, and at least two local pipe portions (11, 21) branch substantially at right angles therefrom and are, or can be, connected to a local heat exchange system (70; 51a; VO, VLi, Ri, Vi, WP) or a heat reservoir (SP).

9. A branch module according to claim 8, comprising at heat exchanger (51a) which constitutes the local heat exchange system in that its primary side is connected to two of the substantially parallel main pipe portions (G, Z) and its secondary side connects a branch module inlet (FWi) for fresh water to a branch module outlet (WWi) for domestic water which is hot during operation.

10. A branch module according to claim 8, wherein the two branching local pipe portions (11, 21) constitute a local outflow pipe (VLᵢ) and a local return pipe (Rᵢ) for a heat-dissipating heat sink (V1, V2, V3) or a heat-supplying heat source (60, WP, SP).

11. A branch module according to claim 10, wherein the two branching local pipe portions (11, 21) have connecting means (12, 22) disposed outside the branch module for a locally-extending outflow pipe (VLi) and a return pipe (Ri).

## Revendications

1. Système de chauffage modulaire décentralisé en technique d'écoulement omnibus, comportant :
a) un omnibus central (100; G, K, Z) d'au moins trois conduites, qui présente une première conduite tubulaire (K) pour un agent de transfert de chaleur chauffé à une première température, une deuxième conduite tubulaire (Z) pour un agent de transfert de chaleur chauffé à une deuxième température et une troisième conduite tubulaire (G), qui sont agencées à proximité étroite l'une de l'autre et sont isolées l'une de l'autre,
b) plusieurs modules d'embranchement (50 à 55) qui sont couplés en des points quelconques de l'omnibus central à celui-ci, au moins deux des conduites tubulaires (Z, G, K) étant respectivement désaccouplées ou accouplées dans le sens de l'écoulement à un omnibus local,
c) l'extrémité libre de chaque omnibus local formé respectivement d'un module d'embranchement menant à un dispositif de chauffage d'eau industrielle (51) agencé à l'intérieur du module ou à un échangeur de chaleur (fournisseurs de chaleur 60; utilisateurs de chaleur V1, V2, V3) agencé hors du module.

2. Système de chauffage selon la revendication 1, dans lequel :
l'omnibus central (100) contient une quatrième conduite tubulaire, qui achemine un agent de refroidissement, et peut être raccordé à un producteur de froid comme fournisseur de chaleur et à un fournisseur de froid comme utilisateur de chaleur.

3. Système de chauffage selon la revendication 1 ou 2, dans lequel chaque module d'embranchement contient trois ou quatre sections de tube courtes (40, 41, 42), qui sont alignées avec le bus central (100), et au moins deux transversales au bus central via des accessoires tels que des pompes (20), des soupapes, des débitmètres ou des mélangeurs ou bien présente des sections de tube (11, 21) - qui bifurquent ou débouchent dans un échangeur de chaleur (51a).

4. Système de chauffage selon la revendication 3, dans lequel :
les sections de tube (40, 41, 42) de l'omnibus central portent à leurs extrémités des dispositifs de connexion qui ne dépassent pas, ou peu, des limites du module d'embranchement.

5. Système de chauffage selon la revendication 3 ou 4, dans lequel :
les modules d'embranchement locaux pour la préparation d'eau chaude contiennent un raccord d'eau sous pression (FW1, FW2, FW3) pour de l'eau d'alimentation fraîche, un raccord d'eau industrielle local (WW1, WW2, WW3) pour de l'eau industrielle chauffée et un échangeur de chaleur (51a), qui est couplé comme utilisateur via l'omnibus local décentralisé aux sections de tube courtes correspondantes (40, 41, 42) de l'omnibus central dans le sens d'écoulement.

6. Système de chauffage selon l'une quelconque des revendications précédentes, dans lequel :
un module d'embranchement (53) couple un collecteur solaire (60) à deux des conduites tubulaires de l'omnibus central (100) pour délivrer de la chaleur de façon décentralisée.

7. Procédé de distribution de chaleur décentralisée dans un gros bâtiment, dans lequel :
- via un omnibus central (100), au moins deux conduites tubulaires (K, Z) délivrent séparément de l'eau chaude à différentes températures dans tout le bâtiment et une conduite tubulaire (G) de l'omnibus central (100) effectue un retour sur tout le bâtiment à température nettement réduite,
- les modules d'embranchement décentralisés (50 à 56) couplent l'omnibus central (100) localement à des omnibus locaux d'écoulement individuels pour y raccorder des utilisateurs de chaleur (V1, V2; 51a; V0) ou des fournisseurs de chaleur (60).

8. Module d'embranchement pour un système de chauffage modulaire selon l'une quelconque des revendications précédentes, dans lequel :
dans un espace étroit, au moins trois sections de tube principales (40, 41, 42) s'étendent en substance parallèlement, ces sections ayant des deux côtés des raccords et au moins deux sections de tube locales (11, 21) bifurquent en substance perpendiculairement à ceux-ci, sections auxquelles peut être raccordé ou est raccordé un système d'échange de chaleur local (70; 51a; V0, Vli, Ri, Vi, WP) ou un accumulateur de chaleur (SP).

9. Module d'embranchement selon la revendication 8, dans lequel :
il est prévu un échangeur de chaleur (51a) qui forme le système d'échange de chaleur local, en raccordant son côté primaire à deux sections de tube principales (G, Z) s'étendant en substance parallèlement, et dont le côté secondaire raccorde une entrée (FWi) du module d'embranchement pour une alimentation en eau fraîche à une sortie (WWi) du module d'embranchement pour de l'eau industrielle chaude - en exploitation.

10. Module d'embranchement selon la revendication 8, dans lequel :
les deux sections de tube locaux de dérivation (11, 21) forment une alimentation locale (VLi) et une retour local (Ri) pour un puits de chaleur (V1, V2, V3) cédant de la chaleur ou une source de chaleur (60, WP, SP) fournissant de la chaleur.

11. Module d'embranchement selon la revendication 10, dans lequel :
les deux section de tube locaux de dérivation (11, 21) ont des dispositifs de connexion (12, 22) agencés à l'extérieur du module d'embranchement pour une alimentation (VLi) et un retour (Ri) s'étendant localement.
